Europäisches Patentamt

European Patent Office

Office européen des brevets

(19)

(11) Veröffentlichungsnummer : **0 050 784**
**B1**

# (12) EUROPÄISCHE PATENTSCHRIFT

(45) Veröffentlichungstag der Patentschrift :
03.04.85

(21) Anmeldenummer : 81108199.1

(22) Anmeldetag : 12.10.81

(51) Int. Cl.⁴ : **A 01 N 25/10, A 01 N 25/34**

(54) **Ektoparasitizidhaltige Polyurethane.**

(30) Priorität : 22.10.80 DE 3039882

(43) Veröffentlichungstag der Anmeldung :
05.05.82 Patentblatt 82/18

(45) Bekanntmachung des Hinweises auf die Patenterteilung : 03.04.85 Patentblatt 85/14

(84) Benannte Vertragsstaaten :
AT BE CH DE FR GB IT LI NL SE

(56) Entgegenhaltungen :
US-A- 4 189 467
Derwent Abstracts nr. 77247A; 77248A; 77249A;
77250A
Die Akte enthält technische Angaben, die nach dem
Eingang der Anmeldung eingereicht wurden und die
nicht in dieser Patentschrift enthalten sind.

(73) Patentinhaber : **BAYER AG**
**Konzernverwaltung RP Patentabteilung**
**D-5090 Leverkusen 1 Bayerwerk (DE)**

(72) Erfinder : **von Bittera, Miklos**
**Max-Scheler-Strasse 7**
**D-5090 Leverkusen 3 (DE)**
Erfinder : **Dorn, Hubert, Dr.**
**Pahlke Strasse 71**
**D-5600 Wuppertal 1 (DE)**
Erfinder : **Schäpel, Dietmar, Dr.**
**Johanniterstrasse 15**
**D-5000 Köln 80 (DE)**
Erfinder : **Stendel, Wilhelm, Dr.**
**In den Birken 55**
**D-5600 Wuppertal 1 (DE)**
Erfinder : **Voege, Herbert, Dr.**
**Martin-Buber-Strasse 41**
**D-5090 Leverkusen 3 (DE)**

EP 0 050 784 B1

# 0 050 784

**Beschreibung**

Die vorliegende Erfindung betrifft neue ektoparasitizidhaltige Polyurethane, die Spreitmittel und Ektoparasitizide oder Ektoparasitizidabmischungen enthalten, sowie Platten, Folien, Formkörper, Beschichtungen oder Imprägnierungen, bestehend aus solchen Polyurethanen und deren Verwendung bei der Bekämpfung von Ektoparasiten.

Die bisher beschriebenen und auch im Handel befindlichen ektoparasitizid wirksamen PVC-Systeme, z. B. in Form von Halsbändern für Kleintiere, bestehen im allgemeinen aus thermoplastischem Polyvinylchlorid, in welches durch Co-Extrusion ein insektizider bzw. ektoparasitizider Wirkstoff, z. B. O,O-Dimethyldichlorvinylphosphat, eingearbeitet wurde. PVC-Systeme auf dieser Basis führen gelegentlich beim Tier zu Hautschäden ; nachteilig ist auch die kurze Anwendungszeit des Bandes infolge des relativ hohen Dampfdruckes von O,O-Dimethyldichlorvinylphosphat ($1,2 \times 10^{-1}$ mm Hg) ($1,599\,6 \cdot 10^{-1}$ mbar).

In der US-PS 3 852 416 werden Tierhalsbänder auf Basis von plastifizierten, thermoplastischen Polymeren, vorzugsweise weichgemachtem Polyvinylchlorid, beschrieben, welche weniger leicht flüchtige Carbamate als insektizide Wirkstoffe enthalten. Während aus den bisher bekannten ektoparasitizid wirksamen Kunststoffhalsbändern leicht flüchtige Wirkstoffe wie O,O-Dimethyldichlorvinylphosphat rasch direkt in die Gasphase übergehen, diffundieren schwerer flüchtige Insektizide wie die erwähnten Carbamate langsam aus dem Band heraus und bilden eine weiße, staubförmige Schicht auf seiner Oberfläche. Ein Teil des Wirkstoffes geht durch Sublimation in die Dampfphase über und wirkt dort, ein anderer Teil wird als Staub über das zu behandelnde Tier verteilt.

Das erwähnte Ausblühen bzw. Ausschwitzen des Wirkstoffes an der Oberfläche des PVC-Systems ist mit einer Reihe von Nachteilen verbunden.

Bei längerer Lagerung des PVC-Systems vor dem Gebrauch diffundiert eine größere Menge des Wirkstoffes an die Oberfläche und reichert sich dort an. Bei der Anwendung befindet sich dann eine sehr hohe Dosis des Insektizides an der Oberfläche, die zwar für eine gute Sofortwirkung sorgt, jedoch bereits schon an der Grenze der für das Tier toxischen Menge liegen kann.

Der an der Oberfläche vorhandene Wirkstoff wird rasch abgerieben. Die in den tieferen Schichten des Bandes liegende Wirksubstanz diffundiert jedoch nur sehr langsam an die Oberfläche nach. Die Freisetzung des Insektizids ist also nicht wie gewünscht über einen möglichst langen Zeitraum hinweg linear.

Der an der Oberfläche des PVC-Systems befindliche staubförmige, weißliche Wirkstoff verleiht diesem ein äußerst unansehnliches, staubiges oder verschimmeltes Aussehen.

Die Wirkstoff-Freisetzung wird beim O,O-Dimethyldichlorvinylphosphat und bei Carbamaten durch in PVC übliche Weichmacher, wie Phthalate, Adipate etc. beeinflußt.

Die US-PS 4 189 467 betrifft Tierhalsbänder mit ektoparasitiziden Eigenschaften, die aus 75-98 Gew.-% eines in Wasser nicht quellbaren hydrophoben Polyurethans und aus 2-25 Gew.-% eines ektoparasitiziden Carbamats bestehen. Das Carbamat hat einen Dampfdruck von $10^{-4}$ bis $10^{-6}$ mm Hg bei 20 °C. Die Halsbänder zeigen de Nachteil, daß sie nur sehr wenig Wirkstoff abgeben und bereits nach relativ kurzer Zeit die Wirkstoffabgabe völlig einstellen.

Aus Derwent Abstract 77 247 A (JP-A-53 107 416), 77 248 A (JP-A-53 107 417), 77 249 A (JP-A-53 107 418), 77 250 A (JP-A-53 107 419) sind faserige Materialien bekannt, die mit pyrethroiden und $C_{16-24}$-Alkoholen, Squalan, Cetylalkohol, Ester von 2-Ethylhexancarbonsäure, Methyl-phenyl-polysiloxan oder Glycerinfettsäureestern getränkt sind und die nach Erhitzen den Wirkstoff verdampfen. Die Wirkungsdauer dieser Systeme is aber nur kurz und somit nicht für alle Zwecke geeignet.

Die oben erwähnten Schwierigkeiten lassen sich vermeiden, wenn man als Träger für die verschiedenen Ektoparasitizide oder deren Kombinationen in Wasser nicht quellbare Polyurethane einsetzt, die bestimmte Mengen Spreitmittel enthalten.

Unter spreitenden Ölen werden solche öligen Flüssigkeiten verstanden, die sich auf der Haut besonders gut verteilen. Sie sind als solche in der Kosmetik bekannt. Nach einem Vorschlag von R. Reymer, Pharm. Ind. *32*, 577 (1970) können sie z. B. durch ihre Oberflächenspannung gegen Luft charakterisiert werden, die danach weniger als 30 dyn/cm betragen sollte.

Die Erfindung betrifft daher ektoparasitizide Polyurethane, die aus einem hydrophoben in Wasser nicht quellbaren Polyurethan bestehen, das, bezogen auf das Polyurethan, 2 bis 30 Gew.-%, vorzugsweise 5 bis 20 Gew.-% eines Ektoparasitizids oder einer Ektoparasitizidkombination und, bezogen auf das Polyurethan, 5-35 Gew.-%, vorzugsweise 8-25 Gew.-%, eines Spreitmittels enthält.

Unter « hydrophob » bzw. « nicht quellbar » werden erfindungsgemäß Polyurethane verstanden, welche beim Eintauchen in Wasser von 20 °C im Verlauf von 24 Stunden weniger als 2 Gew.-%, vorzugsweise weniger als 0,5 Gew.-%, an Wasser durch Quellung aufnehmen.

Neben einem technisch unkomplizierten Herstellungsverfahren haben diese erfindungsgemäßen Polyurethan Spreitmittel-Systeme vor allem den Vorteil, daß aus ihnen der Wirkstoff über einen Zeitraum von einigen Monaten hinweg kontinuierlich und im wesentlichen linear freigesetzt wird.

Überraschenderweise diffundiert nämlich der Wirkstoff aus dem Polyurethan in so abgestufter Weise an die Oberfläche, daß er von dort gleichmäßig durch Sublimation bzw. auf mechanischem Wege an die

2

Umgebung abgegeben wird. Es bilden sich keine merklichen Ausblühungen an der Oberfläche, bei längerer Lagerung wird ein gefälliges Aussehen bewahrt, und es treten keine Toxizitätsprobleme auf. Der Wirksamkeitszeitraum wird deutlich verlängert bzw. ist duch den gezielten Spreitmittel-Einsatz beeinflußbar.

Der Wirkstoff lagert sich an der Oberfläche des Polyurethans nicht in sichtbaren Kristallen ab, so daß die erfindungsgemäßen Polyurethane, z. B. in Form von Platten bzw. Folien, weder an der Ober- noch an der Unterseite ein staubiges Aussehen besitzen. Trotzdem wirken die Polyurethane über einen Zeitraum von mehr als 4 Monaten, wie im Beispielteil näher erläutert wird. Die in vitro-Freisetzungsversuche zeigen, daß aus den erfindungsgemäßen Polyurethanen der Wirkstoff auch nach längerer Lagerung kontinuierlich abgegeben wird, während aus einer vergleichbaren Formulierung auf Basis von Polyvi- nylchlorid die Hauptmenge des Wirkstoffes bereits nach kurzer Zeit herausdiffundiert ist. Danach wird pro Zeiteinheit nur noch eine sehr geringe Menge Ektoparasitizids freigesetzt.

Als Ektoparasitizide kommen Carbamate mit einem Dampf- druck zwischen ca. $10^{-4}$ und $10^{-6}$ Torr $1,333 \cdot 10^{-4}$ mbar-$1,333 \cdot 10^{-6}$ mbar bei 20 °C in Betracht. Derartige Verbindungen werden beispielsweise in der US-PS 3 852 416 genannt ; ihre Herstellung wird in den US-Patentschriften 2 903 478 und 3 203 853 beschrieben.

Erfindungsgemäß bevorzugt wird 2-Isopropoxyphenyl-N-methyl-carbamat mit einem Dampfdruck von $(6,5 \times 10^{-6}$ mm Hg$)$ $(8,664\ 5 \cdot 10^{-6}$ mbar$)$ als ektoparasitizide Komponente eingesetzt.

Andere erfindungsgemäß geeignete Carbamate sind z. B. 3-Tolyl-N-methylcarbamat, 3,4-Xylyl-N- methylcarbamat, m-(1-Methylbutyl)-phenyl-N-methylcarbamat, (2-Ethylthiomethyl-phenyl)-N- methylcarbamat, 4-Dimethylamino-m-tolyl-N-methylcarbamat, 2,3-Dihydro-2,2-dimethylbenzfuranyl-7-N- methylcarbamat, 2-Dimethylcarbamoyl-3-methyl-5-pyrazolyl-dimethylcarbamat und 2-Dimethylamino-5,6- dimethylpyrimidin-4-yl-dimethylcarbamat.

Als Ektoparasitizide kommen außerdem insbesondere synthetische Pyrethroide z. B. solche der DE- OS 2 730 515, bevorzugt jedoch 3-Phenoxy-4-fluor-$\alpha$-cyanobenzyl-2,2-dimethyl-3-[2-(4-chlorphenyl)-2- chlorvinyl]-cyclopropancarboxylat und deren Isomere und Permethrinsäurepentafluorbenzylester, in Frage.

Die Ektoparasitizide können einzeln oder in Kombinationen zur Anwendung gelangen. Der Gehalt an Ektoparasitiziden beträgt 2 bis 30 gew.-%, vorzugsweise 5 bis 20 Gew.-%, bezogen auf das Polyurethan.

Die erfindungsgemäßen Polyurethane werden in an sich bekannter Weise durch Umsetzung von Polyisocyanaten mit höhermolekularen, mindestens zwei gegenüber Isocyanaten reaktionsfähigen Gruppen aufweisenden Verbindungen sowie gegebenenfalls niedermolekularen Kettenverlängerungsmitteln und/oder monofunktionellen Kettenabbrechern hergestellt.

Als Ausgangskomponenten bei der Herstellung der Polyurethane kommen aliphatische, cycloaliphatische, araliphatische, aromatische und heterocyclische Polyisocyanate in Betracht, wie sie z. B. von W. Siefken in Liebig's Annalen der Chemie, 562, Seiten 75 bis 136, beschrieben werden. Beispielhaft seien genannt : Ethylen-diisocyanat, 1,4-Tetramethylendiisocyanat, 1,6-Hexamethylendiisocyanat, 1,12- Dodecandiisocyanat, Cyclobutan-1,3-diisocyanat, Cyclohexan-1,3- und -1,4-diisocyanat sowie beliebige Gemische dieser Verbindungen, 1-Isocyanato-3,3,5-trimethyl-5-isocyanatomethyl-cyclohexan (s. DE- AS 1 202 785 und US-PS 3 401 190), 2,4- und 2,6-Hexahydrotoluylendiisocyanat sowie beliebige Gemische dieser Verbindungen ; Hexahydro-1,3- und/oder -1,4-phenylendiisocyanat, Perhydro-2,4'- und/oder -4,4'-diphenylmethan-diisocyanat, 1,3- und 1,4-Phenylendiisocyanat, 2,4- und 2,6-Toluylendiisocyanat sowie beliebige Gemische dieser Verbindungen ; Diphenylmethan-2,4'- und/oder -4,4'-diisocyanat, Naphthylen-1,5-diisocyanat, Triphenylmethan-4,4', 4''-triisocyanat, Polyphenyl-polymethylen-polyisocyanate, wie sie durch Anilin-Formaldehyd-Kondensation und anschließende Phosgenierung erhalten und z. B. in den GB-PSen 874 430 und 848 671 beschrieben werden ; m- und p-Isocyanatophenyl-sulfonylisocyanate gemäßen der US-PS 3 454 606 ; perchlorierte Arylpolyisocyanate, wie sie z. B. in der DE- AS 1 157 601 und in der US-PS 3 277 138 beschrieben werden ; Carbodiimidgruppen aufweisende Polyisocyanate, wie sie in der DE-PS 1 092 007 und in der US-PS 3 152 162 beschrieben werden ; Diisocyanate, wie sie in der US-PS 3 492 330 beschrieben werden ; Allophanatgruppen aufweisende Polyisocyanate, wie sie z. B. in der GB-PS 994 890, der DE-PS 761 626 und der veröffentlichten holländischen Patentanmeldung 7 102 524 beschrieben werden ; Isocyanuratgruppen aufweisende Polyisocyanate, wie sie z. B. in der US-PS 3 001 973, in den DE-PSen 1 022 789, 1 222 067 und 1 027 394 sowie in den DE-OSen 1 929 034 und 2 004 048 beschrieben werden ; Urethangruppen aufweisende Polyisocyanate, wie sie z. B. in der DE-PS 752 261 oder in der US-PS 3 394 164 beschrieben werden ; acylierte Harnstoffgruppen aufweisende Polyisocyanate gemäß der DE-PS 1 230 778 ; Biuretgruppen aufwei- sende Polyisocyanate, wie dei z. B. in der DE-PS 1 101 394, in den US-PSen 3 124 605 und 3 201 372, sowie in der GB-PS 889 050 beschrieben werden ; durch Telomerisationsreaktionen hergestellte Polyisocyanate, wie sie z. B. in der US-PS 3 654 106 beschrieben werden ; Estergruppen aufweisende Polyisocyanate, wie die zum Beispiel in den GB-PSen 965 474 und 1 072 956, in der US-PS 3 567 763 und in der DE- PS 1 231 688 genannt werden ; Umsetzungsprodukte der obengenannten Isocyanate mit Acetalen gemäß der DE-PS 1 072 385 und polymere Fettsäurereste enthaltende Polyisocyanate gemäß der US- PS 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanaten, einzusetzen. Ferner ist es möglich, beliebige Mischungen der vorgenannten Polyisocyanate zu verwenden.

Bevorzugte Polyisocyanate sind im allgemeinen die Toluylendiisocyanate und die Diphenylmethandiisocyanate.

Ausgangskomponenten für die Herstellung der Polyurethane sind ferner Verbindungen mit mindestens zwei gegenüber Isocyanaten realtionsfähigen Wasserstoffatomen mit einem Molekulargewicht in der Regel von 400-10 000. Hierunter versteht man neben Aminogruppen, Thiolgruppen oder Carboxylgruppen aufweisenden Verbindungen vorzugsweise Polyhydroxylverbindungen, insbesondere zwei bis acht Hydroxylgruppen aufweisende Verbindungen, speziell solche vom Molekulargewicht 800 bis 10 000, vorzugsweise 1 000 bis 6 000, z. B. mindestens zwei, in der Regel 2 bis 8, vorzugsweise aber 2 bis 4, Hydroxylgruppen aufweisende Polyester, Polyäther, Polythioäther, Polyacetale, Polycarbonate und Polyesteramide, wie sie für die Herstellung von homogenen und von zellförmigen Polyurethanen an sich bekannt sind.

Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechenden Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegenenenfalls, z. B. durch Halogenatome, substituiert und/oder ungesättigt sein.

Als Beispiele hierfür seien genannt : Bernsteinsäure, Adipinsäure, Korksäure, Azelainsäure, Sebacinsäure, Phthalsäure, Isophthalsäure, Trimellitsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere und trimere Fettsäuren wie Ölsäure, gegebenenfalls in Mischung mit monomeren Fettsäuren, Terephthalsäuredimethylester und Terephthalsäure-bis-glykolester.

Als mehrwertige Alkohole kommen z. B. Ethylenglykol, Propylenglykol-(1,2) und -(1,3), Butylenglykol-(1,4) und -(2,3), Hexandiol-(1,6), Octandiol-(1,8), Neopentylglykol, Cyclohexandimethanol(1,4-Bis-hydroxymethylcyclohexan), 2-Methyl-1,3-propandiol, Glycerin, Trimethylolpropan, Hexantriol-(1,2,6), Butantriol-(1,2,4), Trimethyläthan, Pentaerythrit, Chinit, Mannit und Sorbit, Methylglykosid, ferner Diethylenglykol, Triethylenglykol, Tetraethylenglykol, Polyethylenglykole, Dipropylenglykol, Polypropylenglykole, Dibutylenglykol und Polybutylenglykole in frage. Die Polyester können anteilig endständige Carboxylgruppen aufweisen. Auch Polyester aus Lactonen, z. B. α-Caprolacton oder Hydroxycarbonsäuren, z. B. α-Hydroxycapronsäure, sind einsetzbar.

Auch die erfindungsgemäß in Frage kommenden, mindestens zwei, in der Regel zwei bis acht, vorzugsweise zwei bis drei, Hydroxylgruppen aufweisenden Polyäther sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selsbt, z. B. in Gegenwart von $BF_3$, oder durch Anlagerung dieser Epoxide, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propylenglykol-(1,3) oder -(1,2), Trimethylolpropan, 4,4'-Dihydroxy-diphenylpropan, Anilin, Äthanolamin oder Ethylendiamin hergestellt. Auch Sucrosepolyäther, wie z. B. in den DE-ASen 1 176 358 und 1 064 938 beschrieben werden, kommen erfindungsgemäß in frage. Vielfach sind solche Polyäther bevorzugt, die überwiegend (bis zu 90 Gew.-%, bezogen auf alle vorhandene OH-Gruppen im Polyäther) primäre OH-Gruppen aufweisen. Auch durch Vinylpolymerisate modifizierte Polyäther, wie sie z. B. durch Polymerisation von Styrol und Acrylnitril in Gegenwart von Polyäthern entstehen US-PSen 3 383 351, 3 304 273, 3 523 093, 3 110 695, deutsche Patentschrift 1 152 536), sind geeignet, ebenso OH-Gruppen aufweisende Polybutadiene.

Unter den Polythioäthern seien insbesondere die Kondensationsprodukte von Thiodiglykol mit sich selbst und/oder mit anderen Glykolen, Dicarbonsäuren, Formaldehyd, Aminocarbonsäuren oder Aminoalkoholen angeführt. Je nach den Co-Komponenten handelt es sich bei den Produkten um Polythiomischäther, Polythioätherester oder Polythioätheresteramide.

Als Polyacetale kommen z. B. die aus Glykolen, wie Diethylenglykol, Triethylenglykol, 4,4'-Dioxethoxydiphenyldimethylmethan, Hexandiol und Formaldehyd herstellbaren Verbindungen in frage. Auch durch Polymerisation cyclischer Acetale lassen sich erfindungsgemäß geeignete Polyacetale herstellen.

Als Hydroxylgruppen aufweisende Polycarbonate kommen solche der an sich bekannter Art in Betracht, die z. B. durch Umsetzung von Diolen wie Propandiol-(1,3), Butandiol-(1,4) und/oder Hexandiol-(1,6), Diethylenglykol, Triethylenglykol oder Tetraethylenglykol mit Diarylcarbonaten, z. B. Diphenylcarbonat, oder Phosgen hergestellt werden können.

Zu den Polyesteramiden und Polyamiden zählen z. B. die aus mehrwertigen gesättigten und ungesättigten Carbonsäuren bzw. deren Anhydriden und mehrwertigen gesättigten und ungesättigten Aminoalkoholen, Diaminen, Polyaminen und ihren Mischungen gewonnenen, vorwiegend linearen Kondensate.

Auch bereits Urethan- oder Harnstoffgruppen enthaltende Polyhydroxylverbindungen sowie gegebenfalls modifizierte natürliche Polyole, wie Rizinusöl, Kohlenhydrate oder Stärke, sind verwendbar.

Auch Anlagerungsprodukte von Alkylenoxiden an Phenol-Formaldehyd-Harze oder auch an Harnstoff-Formaldehydharze sind erfindungsgemäß einsetzbar.

Vertreter dieser erfindungsgemäß zu verwendenden Verbindungen sind z. B. in Higt Polymers, Vol. XVI, « Polyurethans, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45-71, beschrieben.

Selbstverständlich können Mischungen der obengennanten Verbindungen mit mindestens zwei gegenüber Isocyanaten reaktionsfähigen Wasserstoffatomen mit einem Molekulargewicht von 400-10 000, z. B. Mischungen von Polyäthern und Polyestern, eingesetzt werden.

Als erfindungsgemäß gegebenenfalls einzusetzende Ausgangskomponenten kommen auch Verbindungen mit mindestens zwei gegenüber Isocyanaten reaktionsfähigen Wasserstoffatomen von einem Molekulargewicht 32-400 in frage. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8 gegenüber Isocyanaten reaktionsfähige Wasserstoffatome auf, vorzugsweise 2 oder 3 reaktionsfähige Wasserstoffatome.

Als Beispiele für derartige Verbindungen seien genannt.

Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Glyzerin, Trimethylolpropan, Hexantriol-(1,2,6), Trimethyloläthan, Pentaerythrit, Chinit, Mannit und Sorbit, Diethylenglykol, Triethylenglykol, Tetraethylenglykol, Polyethylenglykole mit einem Molekulargewicht bis 400, Dipropylenglykol, Polypropylenglykole mit einem Molekulargewicht bis 400, Dibutylenglykol, Polybutylenglykole mit einem Molekulargewicht bis 400, 4,4'-Dihydroxy-diphenylpropan, Dihydroxymethyl-hydrochinon, Äthanolamin, Diäthanolamin, Triäthanolamin, 3-Aminopropanol, Ethylendiamin, 1,3-Diaminopropan, 1-Mercapto-3-aminopropan, 4-Hydroxy- oder -Amino-phthalsäure, Bernsteinsäure, Adipinsäure, Hydrazin, N,N'-Dimethylhydrazin, 4,4'-Diaminodiphenylmethan, Toluylendiamin, Methylen-bis-chloranilin, Methylen-bis-anthranilsäureester, Diaminobenzoesäure-ester und die isomeren Chlorphenylendiamine.

Auch in diesem Fall können Mischungen von verschiedenen Verbindungen mit mindestens zwei gegenüber Isocyanaten reaktionsfähigen Wasserstoffatomen mit einem Molekulargewicht von 32-400 verwendet werden.

Erfindungsgemäß können jedoch auch Polyhydroxylverbindungen eingesetzt werden, in welchen hochmolekulare Polyaddukte bzw. Polykondensate in feindisperser oder gelöster Form enthalten sind. Derartige modifizierte Polyhydroxylverbindungen werden erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) direkt in situ in den oben genannten, Hydroxylgruppen aufweisenden Verbindungen ablaufen läßt. Derartige Verfahren sind beispielsweise in den DE-ASen 1 168 075 und 1 260 142, sowie den DE-OSen 2 324 134, 2 423 984, 2 512 385, 2 513 815, 2 550 796, 2 550 797, 2 550 833 und 2 550 862 beschrieben. Es ist aber auch möglich, gemäß US-PS 3 869 413 bzw. DE-OS 2 550 860 eine fertige wässrige Polymerdispersion mit einer Polyhydroxylverbindung zu vermischen und anschließend aus dem Gemisch das Wasser zu entfernen.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Bei der Auswahl der für die Herstellung des Polyurethans verwendeten höhermolekularen Polyolkomponente ist zu beachten, daß das fertige Polyurethan in Wasser nicht quellbar sein soll. Die Verwendung größerer Mengen an Polyhydroxylverbindungen mit Ethylenoxideinheiten (Polyethylenglykolpolyäther oder Polyester mit Diethylen- oder Triethylenglykol als Diolkomponente) ist daher zu vermeiden.

Bevorzugt werden hydrophobe Polyester, insbesondere solche auf Basis von Adipinsäure und Ethylenglykol und/oder Butandiol und/oder Neopentylglykol und/oder Hexandiol, Polycarbonatdiole und Polyetherpolyole auf Basis von Propylenoxid oder Tetrahydrofuran eingesetzt. Zur Hydrophobierung des Polyurethans ist es auch in manchen Fällen zweckmäßig (insbesondere wenn größere Mengen an mineralischen Füllstoffen in das Polyurethan eingearbeitet werden), Rizinusöl als Polyolkomponente mitzuverwenden.

Bei der Herstellung der Polyurethane werden oft Katalysatoren mitverwendet. Als mitzuverwendende Katalysatoren kommen solche der an sich bekannten Art in Frage, z. B. tertiäre Amine, wie Triethylamin, Tributylamin, N-Methyl-morpholin, N-Ethyl-morpholin, N-Cocomorpholin, N,N,N',N-Tetramethyl-ethylendiamin, 1,4-Diaza-bicyclo-(2,2,2)-octan, N-Methyl-N'-dimethylaminoethyl-piperazin, N,N-Dimethylbenzylamin, Bis-(N,N-diethylaminoethyl)-adipat, N,N-Diethylbenzylamin, Pentamethyldiethylentriamin, N,N-Dimethylcyclohexylamin, N,N,N',N-Tetramethyl-1,3-butandiamin, N,N-Dimethyl-β-phenylethylamin, 1,2-Dimethylimidazol, 2-Methylimidazol. Als Katalysatoren kommen auch an sich bekannte Mannichbasen aus sekundären Aminen, wie Dimethylamin, und Aldehyden, vorzugsweise Formaldehyd, oder Ketone wie Aceton, Methylethylketon oder Cyclohexanon und Phenolen, wie Phenol, Nonylphenol oder Bisphenol in Frage.

Gegenüber Isocyanatgruppen aktive Wasserstoffatome aufweisende tertiäre Amine als Katalysatoren sind z. B. Triäthanolamin, Triisopropanolamin, N-Methyl-diäthanolamin, N-Ethyl-diäthanolamin, N,N-Dimethyläthanolamin, sowie deren Umsetzungsprodukte mit Alkylenoxiden, wie Propylenoxid und/oder Ethylenoxid.

Als Katalysatoren kommen ferner Silaamine mit Kohlenstoff-Silizium-Bindungen, wie sie z. B. in der DE-PS 1 229 290 (entsprechend der US-PS 3 620 984) beschrieben sind, in Frage, z. B. 2,2,4-Trimethyl-2-silamorpholin und 1,3-Diethylaminomethyl-tetramethyldisiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden.

Erfindungsgemäß können auch organische Metallverbindungen, insbesondere organische Zinnverbindungen, als Katalysatoren verwendet werden.

Als organische Zinnverbindungen kommen vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z. B. Dibutylzinnoxid, Dibutylzinndichlorid, Dibutylzinndiacetat, Dibutylzinndilaurat, Dibutylzinnmaleat oder Dioctylzinndiacetat in Betracht. Selbstverstandlich können alle obengenannten Katalysatoren als Gemische eingesetzt werden.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96 bis 102 beschrieben.

Die Katalysatoren werden in der Regel in einer Menge zwischen etwa 0,001 und 10 Gew.-%, bezogen auf die Menge an Verbindungen mit mindestens zwei gegenüber Isocyanaten reaktionsfähigen Wasserstoffatomen von einem Molekulargewicht von 400 bis 10 000, eingesetzt.

Als Spreitmittel oder spreitende Öle kommen folgende Substanzen in Betracht :

Silikonöle verschiedener Viskosität ;

Fettsäureester aus gesättigten Fettsäuren der Kettenlänge $C_8$-$C_{18}$ und linearen oder verzweigten Alkoholen der Kettenlänge $C_2$-$C_8$ wie zum Beispiel Laurinsäurehexylester, Ethylstearat, Isopropylmyristat, Isopropylpalmitat, Isopropylstearat, Dipropylenglykolpelargonat, Butylstearat ;

Fettsäureester aus ungesättigten Fettsäuren der Kettenlänge $C_{16}$-$C_{20}$ und linearen oder verzweigten Alkoholen der Kettenlänge $C_2$-$C_{12}$, wie zum Beispiel Ölsäuredecylester ;

Fettsäureester aus gesättigten Dicarbonsäuren der Kettenlänge $C_2$-$C_{10}$ und Alkoholen der Kettenlänge $C_2$-$C_6$, wie zum Beispiel Adipinsäurediisopropylester, Dibutylsebacat, Diisodecyladipat, Dibutyladipat ;

Triglyceride mit Fettsäuren der Kettenlänge $C_7$-$C_{18}$ wie z. B. Capryl/Caprinsäuretriglycerid, Stearinsäuretriglycerid ;

Partialglyceride gesättigter oder ungesättigter Fettsäuren.

Fettalkohole, wie Isotridecylalkohol, 2-Octyldodecanol, Cetylstearyl-alkonol, Oleylalkohol ; Fettsäuren, wie Ölsäure, Stearinsäure, Besonders gut geeignete spreitende Öle sind Isopropylmyristat, Isopropylstearat, Isopropylpalmitat, Laurinsäurehexylester, Ölsäuredecylester, Dibutylstearat, Dibutylsebacat, Paraffinöl, Ethylhexylpalmitat/Stearat, bzw. Isotridecylstearat.

Der Gehalt an Spreitmitteln beträgt 5 bis 35 Gew.-%, vorzugsweise 8 bis 25 Gew.%, bezogen auf das Polyurethan.

Als in den erfindungsgemäßen Polyurethanen gegebenenfalls enthaltenen Füll- und Zusatzstoffe sind die in der Polyurethanchemie an sich bekannten Stoffe zu verstehen, wie z. B. Füllstoffe und Kurzfasern auf anorganischer oder organischer Basis, färbende Agenzien wie Farbstoffe und Farbpigmente, wasserbindende Mittel, oberflächenaktive feste Substanzen oder pH-stabilisierende Mittel.

Als anorganische Füllstoffe seien beispielsweise Schwerspat, Titandioxid, Quarzsand, Kaolin, Ruß und Mikroglaskugeln genannt. Von den organischen Füllstoffen können z. B. Pulver auf Basis von Polystyrol oder Polyvinylchlorid eingesetzt werden.

Als Kurzfasern kommen z. B. Glasfasern von 0,1 bis 1 mm Länge oder Fasern organischer Herkunft, wie z. B. Polyester- oder Polyamidfasern, in Frage. Um den erfindungsgemäßen Polyurethanen die gewünschte Färbung zu verleihen, können die bei der Einfärbung von Polyurethanen an sich bekannten Farbstoffe oder Farbpigmente auf organischer oder anorganischer Basis verwendet werden, wie z. B. Eisenoxid- oder Chromoxidpigmente, Pigmente auf Phthalocyanin- oder Monoazo-Basis. Das bevorzugte wasserbindende Mittel sind Zeolithe. Als feste oberflächenaktive Substanzen sein z. B. Cellulosepulver, Aktivkohle, Kieselsäurepräparate und Chrysotil-Asbest genannt.

Zur Stabilisierung der Ektoparasitizide gegen einen zu schnellen Zerfall können auch pH-regulierende Stoffe zugesetzt werden, wie z. B. Stearinsäure oder Puffersysteme auf Basis von anorganischen Phosphorsäuresalzen.

Die Herstellung der erfindungsgemäßen ektoparasitizidhaltigen Polyurethane kann nach den in der Polyurethan-Chemie an sich bekannten Verfahren erfolgen, wobei man die erfindungsgemäßen Polyurethane nach dem thermoplastischen Verarbeitungsverfahren oder auch nach dem Reaktivverfahren erhalten kann.

6

Thermoplastische Polyurethane, wie sie durch Umsetzung von Diisocyanaten mit höhermolekularen Dihydroxyverbindungen und niedermolekularen Glykolen als Kettenverlängerungsmittel bei einem NCO/OH-Verhältnis zwischen ca. 0,97 und 1,05 entstehen, werden beispielsweise in den GB-PSen 1 210 737, 1 270 836, 1 075 274, 1 110 118, 1 025 970, 1 057 018, 1 087 743 und 849 135, den DE-PSen 1 189 268, 1 103 024, 1 106 958 und 1 106 959 sowie den DE-OSen 2 323 393 und 2 418 075 beschrieben.

Man kann den parasitiziden Wirkstoff diesen thermoplastischen Polyurethanen, welche z. B. in granulierter Form vorliegen, zusammen mit den Spreitmitteln, in geeigneten Mischvorrichtungen, beispielsweise in Trommeln oder in einem Extruder zusetzen ; es ist aber auch möglich, den Wirkstoff und Spreitmittel direkt bei der Herstellung des Polyurethans, gegebenenfalls im Gemisch mit einer der Ausgangskomponenten, zuzusetzen, beispielsweise in einem Verfahren gemäß DE-OS 2 302 564 (≙US-PS 3 963 679), wobei Polyisocyanate und Polyhydroxylverbindungen in einer zweiwelligen Schneckenmaschine kontinuierlich miteinander umgesetzt werden. Es ist jedoch hierbei zu beachten, daß die Reaktionstemperatur die Zersetzungstemperatur des als Ektoparasitizid verwendeten Wirkstoffes nicht übersteigt.

Von den in der Polyurethanchemie an sich bekannten und erfindungsgemäß möglichen Herstellungsmethoden unter Verwendung von reaktionsfähigen Gemischen, wie z. B. dem Gieß-, Sprüh- oder Reaktionsspritzgießverfahren, ist das Gießverfahren die erfindungsgemäß bevorzugte Verfahrensweise. Hierbei können die erfindungsgemäßen Polyurethane in an sich bekannter Weise sowohl nach dem Einstufen- als auch nach dem Prepolymer- oder Semi-prepolymer-Verfahren hergestellt werden.

Von den Verfahrensvarianten beim Gießverfahren ist das Einstufenverfahren erfindungsgemäß besonders bevorzugt. In diesem Fall vermischt man höhermolekulare Polyole, ektoparasitiziden Wirkstoff, Spreitmittel, gegebenenfalls Vernetzer sowie Füll- und Zusatzstoffe und schließlich den Katalysator und mischt anschließend die Isocyanatkomponente hinzu.

Bei den Arbeitsweisen nach dem Gießverfahren kann die Förderung, Dosierung und Mischung der Einzelkomponenten oder Komponentengemische mit den für den Fachmann an sich bekannten Vorrichtungen erfolgen.

Die Herstellung der erfindungsgemäßen Polyurethane kann kontinuierlich oder diskontinuierlich vorgenommen werden. Die Arbeitsweise hängt von der Form ab, die man den erfindungsgemäßen ektoparasitizidhaltigen Polyurethanen geben möchte. Wenn man z. B. Formteile herstellen will, ist die diskontinuierliche Arbeitsweise durchzuführen. Soll das erfindungsgemäße Polyurethan jedoch z. B. in dünnen Stücken geeigneter Abmessungen hergestellt werden, dann ist eine kontinuierliche Verfahrensweise günstiger. In diesem Fall produziert man zunächst eine endlose Bandware, die man anschließend in einzelne Stücke, z. B. Platten oder Folien, zerteilen kann.

Bei der kontinuierlichen Herstellung kann das ektoparasitizidhaltige reaktionsfähige Gemisch auch, bevor es durch die Reaktion erstarrt, gesprüht, oder gerakelt werden. Hierbei kann das reaktionsfähige Gemisch auf die verschiedenartigen Materialien auf Basis von natürlichen oder synthetischen Rohstoffen aufgebracht werden, z. B. auf Matten, Vliese, Gewirke, Gestricke, Schaumfolien oder Gewebe.

Die Bedingungen während der Reaktion lassen sich auch in der Weise variieren, daß man entweder kompakte oder geschäumte Polyurethane erhält. Wird z. B. Luft ins reaktionsfähige Gemisch eingeschlagen, so erhält man Schaumstoffe.

Erfindungsgemäß können die ektoparasitiziden Wirkstoffe auch spreitmittelhaltigen, lösungsmittelfreien Reaktivsystemen, bestehend aus einer höhermolekularen Polyisocyanatkomponente und einer Polyaminkomponente, zugesetzt werden, wie sie beispielsweise in der DE-OS 2 448 133 beschrieben werden.

Selbstverständlich ist es erfindungsgemäß auch möglich, den Wirkstoff in die Lösung eines Polyurethans oder Polyurethanharnstoffs einzubringen und anschließend das Lösungsmittel zu verdampfen. Auch in diesem Falle müssen höhere Temperaturen vermieden werden, damit keine Zersetzung des Wirkstoffes eintritt. Man verwendet daher zweckmäßigerweise Lösungen von Polyisocyanat-Polyadditionsprodukten in schwach polaren, leicht flüchtigen Lösungsmitteln oder Lösungsmittelgemischen. Derartige sogenannte « Soft-Solvent »-Systeme werden beispielsweise in der US-PS 2 957 852, der GB-PS 1 040 055, der DE-PS 6 43 811, der DE-OS 1 694 277 (≙US-PS 3 734 894), den US-PSen 3 609 112, 3 752 786 und 3 936 409, sowie den DE-OSen 2 221 750 (≙US-PS 3 912 680), 2 221 751 (≙US-PS 3 867 350) und 2 221 798 (≙US-PS 3 857 809) beschrieben. Auch polarere Lösungsmittelsysteme (z. B. mit Dimethylformamid oder N-Methylpyrrolidon) sind brauchbar, wenn die Ausheiztemperatur niedrig genug gehalten wird.

Es ist erfindungsgemäß möglich, die Polyurethane auf reiner Polyurethanbasis herzustellen, beispielsweise durch Spritzvergießen oder Reaktionsspritzvergießen eines der genannten Thermoplasten oder Ausreagierenlassen eines reaktiven Gießsystems in einer geeigneten Form. In vielen Fällen ist es jedoch erwünscht, ein geeignetes Trägermaterial (z. B. ein Gewebe aus natürlichen und/oder synthetischen Fasern, Leder, Kunstleder oder poröse oder homogene Kunststoff-Folie) mit einem der obengenannten wirkstoffhaltigen thermoplastischen Polyurethane, Zweikomponenten-Gießsystem oder in leicht verdampfbaren Lösungsmitteln gelösten Einkomponenten-Polyurethane zu imprägnieren und/oder zu beschichten. Im allgemeinen wird dieses Trägermaterial, z. B. beim Tierhalsband nach außen getragen, innen befindet sich die Beschichtung mit dem ektoparasitizidhaltigen Polyurethan. Auf diese Weise ist es möglich, z. B. einem Tierhalsband praktisch jedes gewünschte Aussehen zu geben.

7

Die erfindungsgemäßen Polyurethane können in unterschiedlichster Weise und in verschiedensten Formen, z. B. als Granulat, Platte, Folie, Band, Block, Stab- oder Formteil, eingesetzt werden.

Die erfindungsgemäßen ektoparasitizidhaltigen Polyurethane können in den unterschiedlichsten Bereichen zur Anwendung gelangen, beispielsweise in Form von Platten, Streifen oder Formkörpern, die an Tieren, wie Rindern, in geeigneter Weise befestigt werden, und zwar am Schwanz, an den Hörnern oder den Ohren (Ohrenmarken). Auch in Ställen und Wohnräumen können die erfindungsgemäßen Polyurethane angebracht bzw. aufgestellt oder aufgehängt werden ; insbesondere in Ställen können die erfindungsgemäßen Polyurethane als Granulat ausgestreut, als gesprühter Film an Wänden aufgebracht oder als Matten in Form von besprühten Vliesen an Wänden befestigt oder dem Tier aufgelegt werden.

Eine weitere Anwendungsmöglichkeit besteht darin, die erfindungsgemäßen Ektoparasitizid enthaltenden Polyurethane in Form von Granulat zur Bekämpfung von Gastrophilus-Befall bei Pferden einzusetzen. Eine erfindungsgemäß bevorzugte Anwendungsweise ist das Auslegen bzw. Aufstellen von insektizidhaltigen Polyurethanen zur Bekämpfung von Kakerlaken in Küchen oder sonstigen Räumen.

Die erfindungsgemäßen Polyurethane können mit Erfolg gegen zahlreiche schädliche tierische Parasiten (Ektoparasiten) aus der Klasse der Arachniden und der Klasse der Insekten eingesetzt werden.

Als Ektoparasiten der Klasse der Arachniden, die in tropischen, subtropischen und gemäßigten Breiten eine große Rolle spielen, seien beispielsweise genannt aus der Familie der Ixodidea : die australische und südamerikanische einweitige Rinderzecke (Boophilus micorplus), die afrikanische einwirtige Rinderzecke (Boophilus decoloratus), die mehrwirtigen, in allen Erdteilen an Nutz- und Haustieren parasitierenden Zecken wie Rhipicephalus appendiculatus, Thipicephalus evertsi, Amblyomma variegatum, Amblyomma hebraeum, Amblyomma cayennense, Hyalomma truncatum, Dermacentor variabilis und Ixodes ricinus und aus der Familie der Gamasidiae : die Rote Vogelmilbe (Dermanyssus gallinae).

Als Ektoparasiten der Klasse der Insekten seien beispielsweise genannt : Mallophaga, wie beispielsweise der Hundehaarling (Trichodectes canis), der Rinderhaarling (Damalinea bavis), der Schafhaarling (Damalinea ovis) und der Hühnerfederling (Eomenacanthus stramineus) ;

Anoplura, wie beispielsweise die Rinderlaus (Haematopinus erysternus) die Schweinelaus (Haematopinus suis) Diptera, wie beispielsweise die Schaflausfliege (Melophagus ovinus) und Aphaniptera, wie beispielsweise der Hundefloh (Ctenocephalides canus).

Die folgenden Beispiele erläutern die vorliegende Erfindung. Bei den in den Beispielen angegebenen Teilen handelt es sich um Gewichtsteile, sofern nichts anderes angegeben ist.

In den nachfolgenden Beispielen werden folgende ektoparasitizide Wirkstoffe eingesetzt :

Wirkstoff 1 = 2-Isopropoxyphenyl-N-methylcarbamat (Propoxur)

Wirkstoff 2 = 3-Phenoxy-4-fluor-$\alpha$-cyano-benzyl-2,2-dimethyl-3-[2-(4-chlorphenyl)-2-chlorvinyl]-cyclopropancarboxylat

Wirkstoff 3 = Permethrinsäurepentafluorbenzylester.

## Beispiel 1

### Komponente A

| | |
|---|---|
| Trihydroxypolyether (M.G. 4800) | 39,78 |
| Butandiol-1,4 (Vernetzer) | 5,00 |
| Pigment (Eisenoxid) | 0,50 |
| Zeolith-Paste (1 : 1 in Rizinusöl) | 0,50 |
| 2-Isopropoxyphenyl-N-methylcarbamat | 11,40 |
| Laurinsäurehexylester | 18,00 |
| Dibutylzinndilaurat | 0,03 |

### Komponente B

| | |
|---|---|
| Tripropylenglykol-modifiziertes 4,4'-Diisocyanatodiphenyl-methan, Isocyanatgehalt 23 Gew.-% | 24,80 |

## Beispiel 2

### Komponente A

| | |
|---|---|
| Trihydroxypolyether (M.G. 4800) | 37,98 |
| Butandiol-1,4 (Vernetzer) | 5,00 |
| Pigment (Eisenoxid) | 0,50 |
| Zeolith-Paste (1 : 1 Rizinusöl) | 0,50 |
| Wirkstoff wie in Beispiel 1 | 11,40 |
| Isopropylmyristat | 20,00 |
| Dibutylzinndilaurat | 0,02 |

### Komponente B

| | |
|---|---|
| Tripropylenglykol-modifiziertes 4,4'-Diisocyanatodiphenyl-methan, Isocyanatgehalt 23 Gew.-% | 24,60 |

### Beispiel 3

### Komponente A

| | |
|---|---|
| Trihydroxypolyether (M.G. 4800) | 31,063 |
| Butandiol-1,4 | 5,000 |
| Pigment (Eisenoxid) | 0,500 |
| Zeolith-Paste (1 : 1 in Rizinusöl) | 0,500 |
| Wirkstoff 1 | 11,400 |
| Wirkstoff 2 | 7,600 |
| Isopropylmyristat | 20,000 |
| Dibutylzinndilaurat | 0,037 |

### Komponente B

| | |
|---|---|
| Tripropylenglykol-modifiziertes 4,4'-Diisocyanatodiphenyl-methan, Isocyanatgehalt 23 Gew.-% | 23,90 |

### Beispiel 4

### Komponente A

| | |
|---|---|
| Trihydroxypolyether (M.G. 4800) | 36,273 |
| Butandiol-1,4 | 5,000 |
| Pigment (Eisenoxid) | 0,500 |
| Zeolith-Paste (1 : 1 in Rizinusöl) | 0,500 |
| Wirkstoff 1 | 11,400 |
| Wirkstoff 2 | 3,800 |
| Ölsäuredecylester | 18,000 |
| Dibutylzinndilaurat | 0,027 |

### Komponente B

| | |
|---|---|
| Tripropylenglykol-modifiziertes 4,4'-Diisocyanatodiphenyl-methan, Isocyanatgehalt 23 Gew.-% | 24,500 |

### Beispiel 5

### Komponente A

| | |
|---|---|
| Trihydroxypolyether (M.G. 4800) | 45,5 |
| Butandiol-1,4 | 5,0 |
| Wirkstoff 1 | 15,0 |
| Pigment (Eisenoxid) | 0,5 |
| Zeolith-Paste (1 : 1 in Rizinusöl) | 0,5 |
| Ester einer verzweigten Fettsäure mit gesättigten Fettalkoholen $C_{12}$-$C_{18}$ | 8,0 |
| Dibutylzinndilaurat | 0,02 |

### Komponente B

| | |
|---|---|
| Tripropylenglykol-modifiziertes 4,4'-Diisocyanatodiphenyl-methan, Isocyanatgehalt 23 Gew.-% | 25,5 |

### Beispiel 6

### Komponente A

| | |
|---|---|
| Trihydroxypolyether (M.G. 4800) | 39,175 |
| Butandiol-1,4 | 5,00 |
| Zeolith-Paste (1 : 1 in Rizinusöl) | 0,50 |
| Pigment (Eisenoxid) | 0,50 |

9

| | |
|---|---|
| Permethrinsäurepentafluorbenzylester | 10,00 |
| Isopropylmyristat | 20,00 |
| Dibutylzinndilaurat | 0,025 |

Komponente B

Tripropylenglykol-modifiziertes 4,4'-Diisocyanatodiphenyl-methan, Isocyanatgehalt 23 Gew.-%      24,8

Weitere Beispiele sind der folgenden Tabelle zu entnehmen :

(Siehe Tabelle Seite 11 f.)

Tabelle

| Komponente A | 7 | 8 | 9 | 10 | 11 | 12 | 13 |
|---|---|---|---|---|---|---|---|
| Wirkstoffkonzentration | | | (4%) | (4%) | (16%) | (16%) | (14%) |
| Trihydroxypolyether (M.G. 4800) | 39,175 | 39,175 | 44,58 | 44,58 | 33,78 | 33,78 | 35,59 |
| Butandiol-1,4 | 5,000 | 5,000 | 5,00 | 5,00 | 5,00 | 5,00 | 5,00 |
| Eisenoxidpigment | 0,500 | 0,500 | 0,50 | 0,50 | 0,50 | 0,50 | 0,50 |
| Zeolith Paste (1:1 Rizinusöl) | 0,500 | 0,500 | 0,50 | 0,50 | 0,50 | 0,50 | 0,50 |
| Permethrinsäurepentafluor-benzylester | 10,000 | 10,000 | 4,00 | 4,00 | 16,00 | 16,00 | 4,00 |
| 2-Isopropoxyphenyl-N-methylcarbamat | - | - | - | - | - | - | 10,00 |
| Isopropylmyristat | 20,000 | - | 20,00 | - | 20,00 | - | 20,00 |
| Laurinsäurehexylester | - | 20,000 | - | 20,00 | - | 20,00 | - |
| Dibutylzinndilaurat | 0,020 | 0,020 | 0,02 | 0,02 | 0,02 | 0,02 | 0,01 |
| **Komponente B** | | | | | | | |
| Tripropylenglykol-modifi-ziertes 4,4'-Diisocyanato-diphenylmethan | 24,625 | 24,625 | 25,40 | 25,40 | 24,20 | 24,20 | 24,40 |
| Sollgewicht | 100,000 | 100,000 | 100,00 | 100,00 | 100,00 | 100,00 | 100,00 |

0 050 784

Die Polyurethane gemäß Beispiel 1 bis 5 werden nach dem Gießverfahren mit Hilfe einer Bandanlage kontinuierlich hergestellt. Polyether, Wirkstoff bzw. Wirkstoff-Kombination, Farbpaste, Zeolith-Paste, Spreitmittel und Butandiol-1,4 werden in einem beheizbaren Kessel zusammengemischt und auf 60 °C erwärmt. Danach wird der Katalysator (Dibutylzinndilaurat) zugemischt.

Die resultierende Mischung ist die Komponente A, die mit der Komponente B mittels eines Mischaggregates vermischt wird. Der Mischkopf ist auf einer hin- und hergehenden Changiervorrichtung befestigt. Aus dem Mischkopf fließt das Reaktionsgemisch kontinuierlich auf das Kunstleder (z. B. Beschichtung) oder auf ein Kunststoffband. Das Reaktionsgemisch beginnt 30 Sekunden nach Verlassen des Mischkopfes zu reagieren und ist nach ca. 60 Sekunden erhärtet.

Die Temperatur im Polyurethan-Material steigt innerhalb von 2 Minuten auf ca. 90 °C für die Dauer von 1 Minute.

Anschließend gleitet die Bandware durch eine Kühlzone. Das Produkt ist soweit verfestigt, daß es über ein System von langsam umlaufenden Keilriemen zur Schneidevorrichtung geleitet werden kann.

Aus den in den Beispielen 14 bis 16 aufgeführten Kombinationen von Polyurethankomponenten, Spreitmitteln und Wirkstoffen werden jeweils Polyurethanmassen nach dem Prepolymerverfahren (über Isocyanatprepolymere) gegossen und dann granuliert. Die Granulate werden nach dem Spritzgußverfahren zu Strangware verarbeitet.

## Beispiel 14

40,4 Teile eines Polyesters aus Butandiol-1,4 und Adipinsäure (M.G. 2000),
5,14 Teile Butandiol-1,4 und 4,4'-Diphenylmethandiisocyanat, in einer Menge, die einem NCO/OH-Verhältnis von 1,03 entspricht,
15 Teile Wirkstoff 1 und
18 Teile Isopropylmyristat.

## Beispiel 15

43,5 Teile eines Polyesters aus Ethylenglykol, Butandiol und Adipinsäure (M.G. 2000),
5,65 Teile Butandiol-1,4 und 4,4'-Diphenylmethandiisocyanat, in einer Menge, die einem NCO/OH-Verhältnis von 1,03 entspricht,
10 Teile Wirkstoff 1,
2,5 Teile Wirkstoff 2 und
15 Teile Laurinsäurehexylester.

## Beispiel 16

25 Teile eines Polypropylenglykoläthers (M.G. 2000),
25 Teile eines Polyestert aus Butandiol-1,4 und Adipinsäure (M.G. 2000),
4,5 Teile Butandiol-1,4 und 4,4'-Diphenylmethandiisocyanat, in einer Menge, die einem NCO/OH-Verhältnis 1,03 entspricht,
10 Teile Wirkstoff 1,
5 Teile Wirkstoff 2 und
16 Teile Isopropylmyristat.

Als Farbstoff wurde Eisenoxid-Pigment eingesetzt. Alle gemäß Beispiel 14-16 hergestellten Polyurethan-Systeme gaben den Wirkstoff über mehrere Monate hinweg gleichmäßig an die Umgebung ab.

## Beispiel 17

20 g Wirkstoff 1 werden in 50 g Methylethylketon bei Raumtemperatur unter gelegentlichem Umrühren gelöst. Dann werden 25 g N-Methylpyrrolidon und 15 Teile Isopropylmyrisat zugesetzt und in der so erhaltenen Mischung 25 g eines granulierten thermoplastischen Polyurethans gelöst.

Die Lösung wird zu einem Film von 1 mm Dicke gegossen und die Lösungsmittel in einem Trockenschrank bei 100 bis 150 °C im Verlauf von 60 Minuten entfernt. Es entsteht ein homogener, transparenter Film, aus welchem der Wirkstoff auch bei längerer Lagerung nicht ausblüht.

Das Polyurethan wurde durch Umsetzung von

100 Teilen eines Butandiol/Ethylenglykol-Adipinsäurepolyesters (OH-Zahl : 51,7),
7,5 Teilen 1,4-Butandiol und
31,3 Teilen 4,4'-Diisocyanatodiphenylmethan (NCO/OH = 0,97)

in einer Reaktionsschnecke gemäß DE-OS 2 302 564 hergestellt.

**0 050 784**

Vergleichsversuch

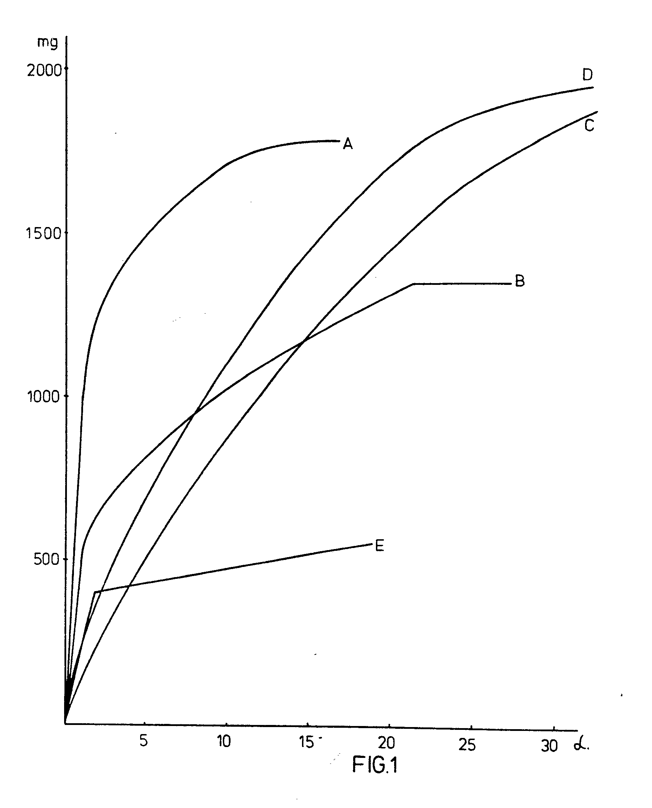

Die in vitro-Freisetzung (Wirkstoff-Freigabe) von Wirkstoff 1 der aus Beispiel 1 und 2 hergestellten erfindungsgemäßen Polyurethan-Systeme wurde in folgender Weise mit einem Propoxur enthaltenden, herkömmlichen PVC-System verglichen (siehe Figur 1).

Die in vitro-Freisetzung des Wirkstoffs 1 wird über Wochen durch standardisierten unf schonenden Abrieb mit Fellwalzen, die eine differenzierte Beurteilung verschiedener Systeme erlaubt, bestimmt.

Diese Tests entsprechen der Vorstellung eines mechanischen Wirkstoffabriebs auf dem Tier, z. B. Rind.

In Figur 1 ist auf der Ordinate die Wirkstoffabgabe in mg und auf der Abszisse die Zeit in Tagen aufgetragen. Die Kurven A, B, C, D und E bedeuten :

A = PVC-System 6 Monate gelagert
B = PVC-System 1 Monat gelagert
C = PUR-System nach Beispiel 1
D = PUR-System nach Beispiel 2
E = PUR-System ohne Spreitmittel

## Ansprüche

1. Ektoparasitizidhaltige Polyurethane, dadurch gekennzeichnet, daß sie aus einem hydrophoben in Wasser nicht quellbaren Polyurethan bestehen, das, bezogen auf das Polyurethan, 2 bis 30 Gew.-% eines Ektoparasitizids oder einer Ektoparasitizidkombination und, bezogen auf das Polyurethan, 5-35 Gew.-% eines Spreitmittels enthält.

2. Ektoparasitizidhaltige Polyurethane nach Anspruch 1, dadurch gekennzeichnet, daß sie 2 bis 30 Gew.-% eines ektoparasitizid wirksamen Carbamats oder eines ektoparasitizid wirksamen synthetischen Pyrethroids oder 2 bis 30 Gew.-% dieser Wirkstoffe in Abmischungen enthalten.

3. Ektoparasitizidhaltige Polyurethane nach Anspruch 2, dadurch gekennzeichnet, daß sie 5 bis 30 Gew.-% eines Silikonöls oder eines Fettsäureesters oder eines Fettalkohols oder einer Fettsäure oder 5 bis 30 Gew.-% einer Mischung eines oder mehrerer dieser Spreitmittel enthalten.

4. Ektoparasitizidhaltige Polyurethane nach Anspruch 1, dadurch gekennzeichnet, daß das Polyurethan nach dem Gießverfahren herstellbar ist und bei 24-stündiger Lagerung in Wasser bei 20 °C weniger als 2 Gew.-% an Wasser durch Quellung aufnimmt.

5. Platten, Folien, Formkörper, Beschichtungen und Imprägnierungen, bestehend aus Polyurethanen gemäß Anspruch 1.

6. Verwendung von Polyurethanen gemäß Anspruch 1 zur Herstellung von Platten, Folien, Formkörpern, Beschichtungen und Imprägnierungen.

7. Verwendung von Platten, Folien, Formkörpern, Beschichtungen und Imprägnierungen, bestehend aus Polyurethanen gemäß Anspruch 1 zur Bekämpfung von Ektoparasiten.

8. Verfahren zur Herstellung von ektoparasitizidhaltigen Polyurethanen, dadurch gekennzeichnet, daß man Polyisocyanate mit höhermolekularen, mindestens zwei gegenüber Isocyanaten reaktionsfähigen Gruppen aufweisenden Verbindungen sowie gegebenenfalls niedermolekularen Kettenverlängerungsmitteln und/oder monofunktionellen Kettenabbrechern in Gegenwart von 2-30 Gew.-% eines Ektoparasitizids oder einer Ektoparasitizidkombination und 5-35 Gew.-% eines Spreitmittels umsetzt.

9. Verfahren nach Anspruch 8, dadurch gekennzeichnet, daß als mindestens zwei gegenüßer Isocyanaten reaktionsfähige Gruppen aufweisende Verbindungen Polyhydroxylverbindungen mit einem Molekulargewicht von 400-10 000 verwendet werden.

10. Verfahren nach Anspruch 9, dadurch gekennzeichnet, daß man als Polyhydroxylverbindungen 2-8 Hydroxylgruppen aufweisende Polyester, Polyether, Polythioether, Polyacetale, Polycarbonate oder Polyesteramide und als Polyisocyanate Toluylendiisocyanat oder Diphenylmethandiisocyanat verwendet.

## Claims

1. Ectoparasiticide-containing polyurethanes, characterised in that they consist of a hydrophobic polyurethane which cannot be swollen in water and which contains, relative to the polyurethane, 2 to 30 % by weight of an ectoparasiticide or of a combination of ectoparasiticides, and, relative to the polyurethane, 5-35 % by weight of a spreading agent.

2. Ectoparasiticide-containing polyurethanes according to Claim 1, characterised in that they contain 2 to 30 % by weight of an ectoparasiticidally active carbamate or of an ectoparasiticidally active synthetic pyrethroid or 2 to 30 % by weight of mixtures of these active compounds.

3. Ectoparasiticide-containing polyurethanes according to Claim 2, characterised in that they contain 5 to 30 % by weight of a silicone oil or fatty acid ester or fatty alcohol or fatty acid or 5 to 30 % by weight of a mixture of one or more of these spreading agents.

13

4. Ectoparasiticide-containing polyurethanes according to Claim 1, characterised in that the polyurethane can be prepared by the casting process and, when kept in water at 20 °C for 24 hours, absorbs less than 2 % by weight of water as a result of swelling.

5. Sheets, films, shaped articles, coatings and impregnations, consisting of polyurethanes according to Claim 1.

6. Use of polyurethanes according to Claim 1 for the production of sheets, films, shaped articles, coatings and impregnations.

7. Use of sheets, films, shaped articles, coatings and impregnations consisting of polyurethanes according to Claim 1, for combating ectoparasites.

8. Process for the preparation of ectoparasiticide-containing polyurethanes, characterised in that polyisocyanates are reacted with relatively high molecular weight compounds containing at least two isocyanate-reactive groupes, and, if appropriate, which low molecular weight chain-lenthening agents and/or monofunctional chain-stoppers, in the presence of 2-30 % by weight of anectoparasiticide or of a combination of ectoparasiticides and 5-35 % by weight of a spreading agent.

9. Process according to Claim 8, characterised in that polyhydroxy compounds having a molecular weight of 400-10,000 are used as the compounds containing at least two isocyanate-reactive groups.

10. Process according to Claim 9, characterised in that polyesters, polyethers, polythioethers, polyacetals, polycarbonates or polyester-amides containing 2-8 hydroxyl groups are used as the polyhydroxy compounds and toluylene diisocyanate or diphenylmethane diisocyanate are used as the polyisocyanates.


**Revendications**

1. Polyuréthannes contenant des ectoparasiticides et caractérisés en ce qu'ils consistent en un polyuréthanne hydrophobe, non gonflable dans l'eau et contenant lui-même, par rapport à son propre poids, 2 à 30 % d'un ectoparasiticide ou d'une combinaison d'ectoparasiticides et, toujours par rapport à son propre poids, 5 à 35 % d'un agent d'étalement.

2. Polyuréthannes contenant des ectoparasiticides selon la revendication 1, caractérisés en ce qu'ils contiennent de 2 à 30 % en poids d'un carbamate ectoparasiticide actif ou d'un pyréthroïde synthétique ectoparasiticide actif ou 2 à 30 % en poids de ces substances actives en mélange entre elles.

3. Polyuréthannes contenant des ectoparasiticides selon la revendication 2, caractérisés en ce qu'ils contiennent de 5 à 30 % en poids d'une huile de silicone ou d'un ester d'acide gras ou d'un alcool gras ou d'un acide gras ou 5 à 30 % en poids d'un mélange d'un ou plusieurs de ces agents d'étalement.

4. Polyuréthannes contenant des ectoparasiticides selon la revendication 1, caractérisés en ce que le polyuréthanne peut être préparé par la technique de coulée et, en 24 h d'immersion dans l'eau à 20 °C, absorbe par gonflement moins de 2 % en poids d'eau.

5. Plaques, feuilles, objets moulés, revêtements et imprégnations consistant en polyuréthannes selon la revendication 1.

6. Utilisation des polyuréthannes selon la revendication 1, pour la préparation de plaques, de feuilles, d'objets moulés, l'application de revêtements et les imprégnations.

7. Utilisation de plaques, feuilles, objets moulés, revêtements et imprégnations consistant en polyuréthannes selon la revendication 1 pour la lutte contre les ectoparasites.

8. Procédé de préparation de polyuréthannes contenant des ectoparasiticides, caractérisé en ce que l'on fait réagir des polyisocyanates avec des composés à haut poids moléculaire portant au moins deux groupes réactifs avec les isocyanates et le cas échéant des agents d'allongement des chaînes à bas poids moléculaire et/ou des coupeurs de chaînes monofonctionnels en présence de 2 à 30 % en poids d'un ectoparasiticide ou d'une combinaison d'ectoparasiticides et 5 à 35 % en poids d'un agent d'étalement.

9. Procédé selon la revendication 8, caractérisé en ce que l'on utilise en tant que composés portant au moins deux groupes réactifs avec les isocyanates des composés polyhydroxylés de poids moléculaire 400 à 10 000.

10. Procédé selon la revendication 9, caractérisé en ce que l'on utilise en tant que composés polyhydroxylés des polyesters, polyéthers, polythioéthers, polyacétals, polycarbonates ou polyesters-amides contenant deux à huit groupes hydroxy et en tant que polyisocyanates du toluylènediisocyanate ou du diphénylméthanediisocyanate.

FIG.1